# EUROPEAN PATENT APPLICATION

(11) **EP 4 684 870 A1**
(43) Date of publication of application: **28.01.2026**
(21) Application number: 24190561.1
(22) Date of filing: 24.07.2024
(51) Int. Cl.: B01J 8/00, B01J 8/38, B01J 19/18, B01J 19/24, C22B 26/12, B01J 20/04, B01J 20/08, B01J 20/30, B01J 20/28

(54) **PROCESS AND REACTOR FOR SYNTHESIZING A LITHIUM SORBENT MATERIAL**

(71) Applicant: Vulcan Energie Ressourcen GmbH, 76227 Karlsruhe (DE)
(72) Inventor: Zink, Daniel, 76676 Graben-Neudorf (DE); Joly, Damien, 67930 Beinheim (FR); Brand, Stefan, 69493 Hirschberg-Leutershausen (DE)
(74) Representative: Durm Patentanwälte PartG mbB

(57) **Abstract**

The present invention relates to a process for synthesizing a lithium sorbent material, in particular a lithium aluminate intercalate, comprising steps of:
providing an alumina precursor (10), in particular a three-dimensionally structured porous activated alumina, a lithium precursor (20), in particular lithium hydroxide and/or lithium chloride and a fluid (30), preferably water;
dissolving or suspending the alumina precursor (10) and the lithium precursor (20) in the fluid (30) for obtaining a reaction mixture (40); and
circulating the reaction mixture (40), or at least a liquid portion of the reaction mixture (40), in a loop (50) for mixing the reaction mixture (40). The invention further relates to a reactor (60), a lithium sorbent material and use of the lithium sorbent material.

## Description

The present invention relates to a process for synthesizing a lithium sorbent material and a reactor for synthesizing a lithium sorbent material according to the process. The present invention further relates to a lithium sorbent material and a use of the lithium sorbent material in a direct lithium extraction process.

Known methods for synthesizing lithium sorbent materials, such as the method described in WO 2015/171109 A1, yield a lithium sorbent material that has an undesirable high pressure drop during direct lithium extraction. This lowers the efficiency and throughput during direct lithium extraction.

Thus, novel approaches are needed for obtaining an improved lithium sorbent material. In particular, it is desired to provide a simple, cheap and fast approach, which results in an optimized lithium sorbent material having a lower pressure drop during direct lithium extraction.

In view of the above, the invention is defined by the subject matter with the features of the independent claims.

A first aspect of the invention relates to a process for synthesizing a lithium sorbent material, in particular a lithium aluminate intercalate, comprising steps of:
- providing an alumina precursor, in particular a three-dimensionally structured porous activated alumina, a lithium precursor, in particular lithium hydroxide and/or lithium chloride and a fluid, preferably water;
- dissolving or suspending the alumina precursor and the lithium precursor in the fluid for obtaining a reaction mixture; and
- circulating the reaction mixture, or at least a liquid portion of the reaction mixture, in a loop for mixing the reaction mixture.

A second aspect of the invention relates to a reactor for synthesizing a lithium sorbent material according to the process of the first preferred aspect, in particular a reactor, comprising:
- a fluid circulation unit, preferably a pump, for circulating the reaction mixture, or at least a liquid portion of the reaction mixture, in a loop through the reactor; and
- a container with an inlet opening and an outlet opening, which are connected to the fluid circulation unit, wherein
- the container comprises a filter unit for retaining solid particles, which is arranged between the inlet opening and the outlet opening.

A third aspect of the invention relates to a lithium sorbent material, in particular a lithium aluminate intercalate, preferably synthesized according to the process of the first aspect of the invention, comprising:
- a lithium content higher than 2.3 wt.-%, preferably higher than 2.8 wt.-%, more preferably 3.5 wt.-%;
- a particle size distribution with
- a D10 value from 350 µm to 550 µm, preferably from 450 µm to 500 µm, and
- preferably a D50 value from 650 µm to 1100 µm, more preferably from 750 µm to 850 µm.

A fourth aspect of the invention relates to a use of the lithium sorbent material according to the third aspect of the invention in a direct lithium extraction process.

A first preferred aspect relates to a process for classification of a lithium sorbent material, in particular a lithium aluminate intercalate, comprising steps of:
- providing the lithium sorbent material, comprising small particles with a preferred mean size lower than 500 µm and large particles with a preferred mean size higher than or equal to 500 µm, and a container with an inlet opening and an outlet opening, and a fluid;
- suspending the lithium sorbent material in the fluid in the container for obtaining a suspension; and
- streaming the fluid through the inlet opening such that the suspension, or at least a liquid portion of the suspension which is at least partly comprising the small particles, is overflowing through the outlet opening, such that the small particles are fluidized and at least partly separated from the large particles, and/or
- removing the suspension at least partly from the container through the outlet opening, in particular by pumping it out, such that the small particles are fluidized and at least partly separated from the large particles.

A second preferred aspect relates to a reactor for classification of a lithium sorbent material according to the process of the first aspect of the invention, comprising:
- the container with the inlet opening and the outlet opening;
- a fluid mover unit, preferably a pump, for streaming the fluid through the inlet opening and/or for removing the suspension, or at least a liquid portion of the suspension which is at least partly comprising the small particles, through the outlet opening.

Preferred embodiments of the invention are defined in the dependent claims. In the context of the present invention, it shall be understood that the process has similar and/or identical preferred embodiments with the reactor, in particular as defined in the dependent claims and as disclosed herein.

The reactor is preferably configured to carry out the process for synthesizing and optionally the process for classification. In other words, the reactor for synthesizing and the reactor for classification are preferably identical. Therefore, the reaction mixture and the fluid are beneficially employed in the same manner, especially within the processes and/or the reactor. The reactor is preferably a loop flow reactor. The fluid mover unit is preferably the fluid circulation unit. The process for classification is preferably conducted after the process for synthesizing, more preferably within the same reactor.

The product of the process for synthesizing and/or the process for classification is preferably the lithium sorbent material according to the third aspect of the invention. In other words, this lithium sorbent material can be for example obtained directly in the process for synthesizing but can also be obtained in the process for classification, in which a lithium sorbent material, which has not been synthesized according to the process for synthesizing, is classified for obtaining the lithium sorbent material according to the third aspect of the invention. However, advantageously the lithium sorbent material according to the third aspect of the invention is obtained by a preferred combination of the process for synthesizing and the process for classification, wherein the lithium sorbent material obtained from the process for synthesizing is employed in the process for classification. The use of the lithium sorbent material is preferably carried out in a process for direct lithium extraction.

The present invention is in particular based on the idea of circulating the reaction mixture in a loop for mixing the reaction mixture and in particular without permanently stirring the reaction mixture. Preferably the reaction mixture is only stirred intermittently or in the alternative not stirred at all. Surprisingly it has been observed, that by circulating the reaction mixture in a loop during the synthesis, the resulting lithium sorbent material has a significantly lower pressure drop during direct lithium extraction. This is particularly advantageous for achieving higher efficiency and throughput during direct lithium extraction. The reaction mixture is preferably mixed efficiently with a performance close to an ideal mixing in a continuous stirred-tank reactor. In addition, circulating the reaction mixture in a loop instead of permanently stirring the mixture leads to lower maintenance costs and less energy consumption, while ensuring a safe, scalable, fully controllable and tuneable process.

Upon further investigation it has been found that the advantageous behaviour described before surprisingly correlates with the particle size distribution of the lithium sorbent material. With the present invention and the preferred aspects and embodiments it becomes possible to efficiently finetune the particle size distribution of the lithium sorbent material, for example by manipulating a flow rate of the reaction mixture.

The process for classification and the reactor for classification are in particular based on the idea of fluidizing the small particles, while not fluidizing the large particles. Advantageously, this results in a suspension of fluidized small particles, which can be removed and thereby separated from the large particles. In other words, favorably a process for separating the small particles from the large particles is provided. The fluidization of the small particles can be achieved by an overflowing, wherein the fluid is preferably streamed in direction from the inlet opening towards the outlet opening, more preferably in a direction opposite to the direction of gravitation. For the overflowing the inlet opening is in particular arranged opposite to the outlet opening in direction of gravitation.

Additionally or alternatively, the fluidization of the small particles can be achieved in particular by actively removing the suspension, through the outlet opening, for example by pumping it out. The suspension which is overflowing through the outlet opening or removed through the outlet opening is in particular comprising the small particles and preferably not comprising the large particles.

Surprisingly it has been observed, that by classification of the lithium sorbent material, the resulting lithium sorbent material comprising the large particles has a significantly lower pressure drop during direct lithium extraction. This is particularly advantageous for achieving higher efficiency and throughput during direct lithium extraction. In addition, the present process has low maintenance costs and has only a low energy consumption, while ensuring a safe, scalable, fully controllable, and tunable process.

The reaction mixture is preferably a heterogenous reaction mixture, such as for example a suspension. In particular, the reaction mixture comprises the liquid portion, which can be fluidized, and a solid portion, which may not be fluidized. The liquid portion preferably comprises at least partly the small particles, which are circulated in the loop. However, the reaction mixture is not limited thereto, but can also encompass a homogenous reaction mixture, for example a solution.

Preferably, the suspension is obtained by pouring or pumping the fluid over the lithium sorbent material or by pouring or pumping the lithium sorbent material into the fluid. Alternatively preferred, the lithium sorbent material and the fluid may be stirred continuously or intermittently for obtaining the suspension.

In a preferred embodiment the process for synthesizing comprises steps of circulating the reaction mixture, or at least the liquid portion of the reaction mixture, in a loop with a flow rate, which is smaller than the fluidization velocity of particles in the reaction mixture, in particular smaller than the fluidization velocity of suspended alumina precursor particles. Advantageously, avoiding fluidization of the particles leads to increased yield of the lithium sorbent material with the desired particle size distribution. Surprisingly, the mixing of the reaction mixture below the fluidization velocity of the particles is sufficient to ensure fast reaction times and reproducible results while synthesizing the lithium sorbent material with a low pressure drop during direct lithium extraction.

In a preferred embodiment the process for synthesizing comprises steps of circulating the reaction mixture, or at least the liquid portion of the reaction mixture, in a loop with a flow rate from 1 BV/h to 5 BV/h, preferably from 2 BV/h to 4 BV/h. BV is the abbreviation for equivalent bed volume. The equivalent bed volume is preferably a volume occupied by solid material in the reactor. The equivalent bed volume is in particular a volume of the container through which the reaction mixture is streamed and/or removed and/or circulated, more preferably a volume between the inlet opening and the outlet opening. However, the equivalent bed volume may also be the total volume of the container, in particular if the inlet opening and outlet opening are arranged such, that the reaction mixture is circulated through the whole volume of the container. A flow rate in the aforementioned range is particular favorable for synthesizing a lithium sorbent material with a low pressure drop during direct lithium extraction.

In a preferred embodiment the process for synthesizing comprises steps of providing the reactor, in particular a loop flow reactor, comprising the container with the filter unit for retaining solid particles; and circulating the reaction mixture in a loop such that the reaction mixture, and in particular the liquid portion, passes through the filter unit. Preferably, the container has a height to diameter ratio from 2 to 4, more preferably from 2.8 to 3.2, most preferably of about 3. In particular the container comprises a free volume, which amounts to about 1/3 of the container's total volume. The rest of the container's total volume is preferably filled with the reaction mixture or the suspension. Optionally, for suspending, the container is filled to about 2/3 of the containers total volume with the reaction mixture or the fluid. In particular the fluid circulation unit circulates the reaction mixture in a loop through the container.

In a preferred embodiment the process for synthesizing comprises steps of providing the reactor comprising an inlet opening, and wherein during circulating the reaction mixture, or at least the liquid portion of the reaction mixture, in a loop, the reaction mixture enters the container through the inlet opening in a direction opposite to the direction of gravitation. Favorably, this results in a desired lithium sorbent material with a low pressure drop during direct lithium extraction. However, in an alternative preferred embodiment, the reaction mixture enters the container through the inlet opening in the direction of gravitation or in a direction orthogonal to the direction of gravitation.

In a preferred embodiment the process for synthesizing comprises steps of providing the reactor comprising the fluid circulation unit, preferably a pump; and circulating the reaction mixture, or at least the liquid portion of the reaction mixture, in a loop with the fluid circulation unit. Advantageously, the fluid circulation unit allows to precisely control the flow rate and thereby set the process parameters.

In a preferred embodiment the process for synthesizing comprises steps of constantly circulating the reaction mixture, or at least the liquid portion of the reaction mixture, in a loop, preferably while maintaining the pressure in the reactor with a deviation of less than 20%, in particular until the synthesis is completed. Preferably the pressure in the reactor is ambient pressure. It was surprisingly found that maintaining a constant pressure positively influences the low pressure drop performance of the lithium sorbent material.

In a preferred embodiment the process for synthesizing comprises steps of heating and/or cooling the reaction mixture, preferably outside of the container. Advantageously, this allows to control and finetune the reaction parameters for the synthesis resulting in a better process control and higher yields of the desired lithium sorbent material.

In a preferred embodiment the filter unit is configured as a filter mesh or a filter plate. Preferably the filter unit comprises a plurality of pores and/or slits, with a pore size or a slit size from 350 µm to 500 µm, more preferably between 400 µm to 450 µm. The filter unit is in particular comprised by the container and preferably arranged inside the container. Optionally, the filter unit is comprising or consisting of stainless steel or alloy steel or polypropylene or a combination thereof. Favorably the filter unit constraints the fluidization of the suspended particles and creates a uniform flow of the reaction mixture.

In a preferred embodiment the reactor comprises a heat exchanger, in particular for heating the reaction mixture, wherein the heat exchanger is preferably arranged outside of the container. The heat exchanger is preferably configured for adjusting the temperature of the reaction mixture. In particular, the heat exchanger is configured for adjusting the temperature of the reaction mixture to a temperature from 20°C to 90°C, preferably from 50°C to 80°C. Advantageously, the heat exchanger allows for a homogeneous and reproducible temperature, which is particularly important for controlling the reaction conditions, thereby increasing performance and leading to increased yields.

In a preferred embodiment the reactor comprises a housing, accommodating the reactor or at least a portion of the container, for controlling a temperature of the reaction mixture. Beneficially, the housing leads to an improved energy efficiency and thereby to lower energy costs.

Optionally, the inlet opening is equipped with a flow distributor for distributing the reaction mixture entering the container. The flow distributor preferably comprises a plate with a plurality of holes and/or a mesh and/or a tube widening towards the mixing chamber and/or a tube with a plurality of holes and/or a plurality of slots or a plurality of such tubes. The holes and/or slots are preferably designed such, that a uniform outlet flow through the holes and/or the slots, optionally across the entire length of the tube, is achieved. The tube or the plurality of tubes can be arranged in form of a spiral or a star. The flow distributer is configured to distribute the reaction mixture brine and/or suspension and/or the fluid in the container. Advantageously, the flow distributor leads to an optimized flow of the reaction mixture passing therethrough before entering the container, thereby enhancing mixing in the reactor.

In a preferred embodiment the process for classification comprises steps of streaming the fluid through the inlet opening; and/or removing the suspension at least partly from the container through the outlet opening with a flow rate, which is higher than the fluidization velocity of the small particles, preferably higher than 1.0 m/h, more preferably higher than 4.0 m/h.

In a preferred embodiment the process for classification comprises steps of streaming the fluid through the inlet opening; and/or removing the suspension at least partly from the container through the outlet opening with a flow rate, which is lower than the fluidization velocity of the large particles, preferably lower than 20.0 m/h, more preferably lower than 18.0 m/h.

In a preferred embodiment the process for classification comprises steps of streaming the fluid through the inlet opening; and/or removing the suspension at least partly from the container through the outlet opening with a flow rate from 2.0 m/h to 20.0 m/h, preferably from 2.0 m/h to 18.0 m/h, more preferably from 2.0 m/h to 14.0 m/h, most preferably from 4.0 m/h to 8.0 m/h. The aforementioned flow rate ranges favorably allow for fluidization of the small particles while avoiding fluidization of the large particles. Additionally, the flow rate ranges beneficially result in an efficient and economic process.

In a preferred embodiment of the process for classification, the flow rate is gradually increased. In particular such, that at least a portion of the large particles is fluidized after the small particles have been separated.

In a preferred embodiment the process for classification comprises steps of monitoring an amount of the suspension removed from the outlet opening and/or an amount of suspension overflowing through the outlet opening and/or an amount of fluid streamed through the inlet opening. Beneficially, monitoring the amount of removed suspension and/or streamed fluid allows to easily control the process.

In a preferred embodiment the process for classification comprises steps of streaming the fluid through the inlet opening; and/or removing the suspension at least partly from the container through the outlet opening in an amount of at least 1.5 BV, preferably at least 3 BV, more preferably from 6 BV volume to 36 BV, most preferably from 12 BV to 30 BV. Especially in embodiments, wherein more than 0.5 BV of the suspension is removed from the container by pumping it out, the fluid is preferably streamed simultaneously into the container for limiting a pressure drop inside the container.

In a preferred embodiment the process for classification comprises steps of monitoring a particle size distribution of the lithium sorbent material, preferably while streaming the fluid through the inlet opening and/or while removing the suspension at least partly from the container through the outlet opening. Advantageously, monitoring the particle size distribution allows to easily control the process and for example to stop the process as soon as a pre-defined particle size distribution is reached.

In a preferred embodiment the process for classification comprises steps of stopping the streaming of the fluid through the inlet opening and/or stopping the removing of the suspension through the outlet opening if a particle size distribution of the lithium sorbent material has a D10 value of more than 200 µm, preferably from 300 µm to 550 µm, more preferably from 450 µm to 500 µm. Surprisingly and favorably the D10 value was recognized as a suitable parameter for monitoring the process and indicating the quality of the desired lithium sorbent material.

In a preferred embodiment the process for classification comprises steps of stopping the streaming of the fluid through the inlet opening and/or stopping the removing of the suspension through the outlet opening, if a particle size distribution of the lithium sorbent material has a mean particle size of more than 500 µm, preferably more than 800 µm, most preferably equal to 850 µm or more than 850 µm. Advantageously the mean particle sizes in the aforementioned ranges are particularly suitable for the desired lithium sorbent material.

In a preferred embodiment the process for classification comprises steps of monitoring a turbidity of the suspension, preferably while streaming the fluid through the inlet opening and/or while removing the suspension through the outlet opening. Advantageously, monitoring the turbidity of the suspension allows to easily control the process and for example to stop the process as soon as a pre-defined turbidity is reached thereby saving costs.

In a preferred embodiment the process for classification comprises steps of stopping the streaming of the fluid through the inlet opening and/or stopping the removing of the suspension through the outlet opening, if a turbidity of the suspension is below 300 NTU, more preferably below 200 NTU, most preferably below or equal to 150 NTU. Surprisingly and favorably the turbidity in the aforementioned ranges is particularly suitable for the desired lithium sorbent material.

The monitoring of the turbidity and/or of the mean particle size and/or of the D10 value and or of the D50 value may be performed at the outlet opening and/or inside the container, preferably in a portion of the container comprising the large particles.

In a preferred embodiment the process for classification comprises steps of streaming the fluid through a filter unit and/or removing the suspension through a filter unit such that the large particles are retained inside the container, while the suspended small particles are overflowing through the outlet opening and/or removed through the outlet opening. The filter unit advantageously enhances the classification efficiency of the process.

In a preferred embodiment the fluid enters the container through the inlet opening in a direction opposite to the direction of gravitation. Optionally, the inlet opening is arranged at a bottom portion of the container, preferably at the lowest end of the container. Optionally, the outlet opening is arranged at a top portion of the container, preferably at the highest end of the container. Streaming opposite to the direction of gravitation is favorable for enhancing the separation quality.

In a preferred embodiment the reactor comprises an overflow tank for collecting the overflowing suspension. In a preferred embodiment the reactor comprises a solid-liquid separation unit, in particular a filter, for separating the small particles from the suspension, in particular after passing through the outlet opening, for yielding the small particles and the fluid, which is preferably recycled and again streamed into the container, for example through the inlet opening. Beneficially, the overflow tank and/or the solid-liquid separation unit allow to recycle the fluid and thus renders the process more sustainable and cost efficient.

In a preferred embodiment, the container comprises the filter unit for retaining the large particles, especially during fluidization of the small particles. Preferably the filter unit is arranged between the inlet opening and the outlet opening inside the container. In particular, the filter unit is arranged such, that the large particles are retained inside the container, while the suspended small particles are overflowing through the outlet opening and/or removed through the outlet opening. Preferably, the filter unit is arranged upstream of the lithium sorbent material in flow direction of the fluid.

In a preferred embodiment the reactor comprises a turbidity monitoring unit, for monitoring a turbidity of the suspension, preferably at the outlet opening and/or in the container; and/or a particles size monitoring unit, for monitoring a particle size distribution of the lithium sorbent material, preferably at the outlet opening and/or in the container.

In a preferred embodiment the lithium sorbent material comprises a small particle content lower than 10.0 wt.-%, preferably lower than 6.0 wt.-%, more preferably lower than 5.4 wt.-%. Particularly, the small particles have a mean particle size smaller than 350 µm, preferably smaller than 200 µm. A low content of small particles in the lithium sorbent material is particularly advantageous for achieving a low pressure drop during direct lithium extraction.

In a preferred embodiment, the lithium sorbent material has a pressure drop measured at a flow rate of 14 m/h, in particular in the direct lithium extraction process, which pressure drop is lower than 600 mbar, preferably lower than 300 mbar, more preferably lower than 250 mbar, most preferably about 200 mbar. A pressure drop in the aforementioned ranges is particularly advantageous for enhancing efficiency in a direct lithium extraction process.

In a preferred embodiment, the process comprises providing a reactor according to the second aspect of the invention and preferably conducting all process steps therein. Preferably, the steps of the process or the processes take place consequently in the order mentioned in the claims or the description.

These and other aspects of the invention will be apparent from and elucidated with reference to the embodiment(s) described hereinafter. In the following drawings
- Figure 1: shows a schematic illustration of a process for synthesizing the lithium sorbent material according to the present invention;
- Figure 2: shows a schematic illustration of a reactor for synthesizing the lithium sorbent material according to the present invention;
- Figure 3: shows a schematic illustration of a process for classification of a lithium sorbent material;
- Figure 4: shows a schematic illustration of a reactor for classification of a lithium sorbent material; and
- Figure 5: shows a schematic illustration of a diagram of an exemplary turbidity measurement.

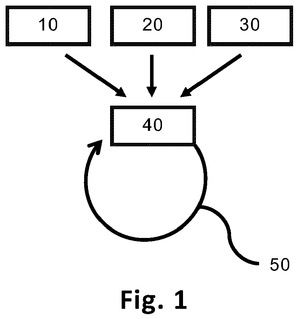

In Fig. 1 a schematic illustration of a process for synthesizing a lithium sorbent material according to the present invention is displayed. The lithium sorbent material to be produced is in particular a lithium aluminate intercalate. The process comprises steps of firstly providing an alumina precursor 10, such as a three-dimensionally structured porous activated alumina, a lithium precursor 20, in the present example lithium hydroxide and a fluid 30, which is preferably water. Next, the alumina precursor 10 and the lithium precursor 20 are suspended in the fluid 30 for obtaining a reaction mixture 40. Subsequently, the reaction mixture 40 or at least a liquid portion of the reaction mixture 40 is circulated in a loop 50 for mixing.

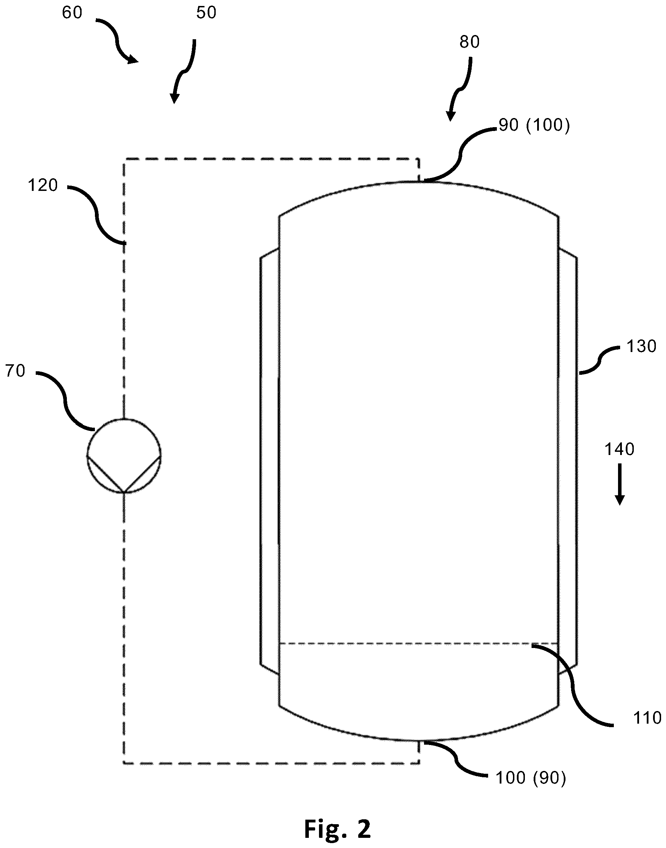

In Fig. 2 a schematic illustration of a reactor 60 for synthesizing a lithium sorbent according to the invention is shown. The process shown in Fig. 1 is performed inside the reactor 60. The reactor 60 is a loop flow reactor and comprises a fluid circulation unit 70, which is in the present example a pump for circulating the reaction mixture 40 in a loop 50 through the reactor 60. In addition, the reactor 60 comprises a container 80 with an inlet opening 90 and an outlet opening 100. The container 80 comprises a filter unit 110 for retaining solid particles, which is arranged between the inlet opening 90 and the outlet opening 100 inside the container 80.

Preferably the filter unit 110 comprises a plurality of pores and/or slits, with a pore size or a slit size from 350 µm to 500 µm, more preferably between 400 µm to 450 µm. The inlet opening 90 and the outlet opening 100 are connected to the fluid circulation unit 70 in particular by a conduit 120. The container 80 has a height to diameter ratio from 2.8 to 3.2 and comprises a free volume, which amounts to about 1/3 of the container's 80 total volume. The rest of the container's 80 total volume is preferably filled with the reaction mixture 40. The reactor 60 further comprises a housing 130 accommodating a portion of the container 80.

The process conducted in the reactor 60 of Fig. 2 has all the features of the process illustrated in Fig. 1 and in addition, the circulation of the reaction mixture 40 in the loop 50 is performed with a flow rate, which is smaller than the fluidization velocity of the particles in the reaction mixture 40, in particular smaller than the fluidization velocity of the alumina precursor 10 particles. In particular the flow rate is from 1 BV/h to 5 BV/h for advantageously avoiding fluidization of the alumina precursor 10 particles, which leads to an increased yield of the lithium sorbent material with the desired particle size distribution while ensuring fast reaction times and reproducible results. The reaction mixture 40 is circulated in a loop 50 by ambient pressure and while maintaining the pressure in the reactor 60 with a deviation of less than 20% until the synthesis is completed. While circulating in a loop 50, the reaction mixture 40 enters the container 80 through the inlet opening 90 in a direction of gravitation 140. In another embodiment, which is not shown, the reaction mixture 40 enters the container 80 through the inlet opening 90 in a direction opposite to the direction of gravitation 140 in the illustrated example. By circulating the reaction mixture 40 in a loop 50 during the synthesis, the resulting lithium sorbent material has a significantly lower pressure drop during direct lithium extraction, which is particularly advantageous for achieving higher efficiency and an improved throughput during direct lithium extraction.

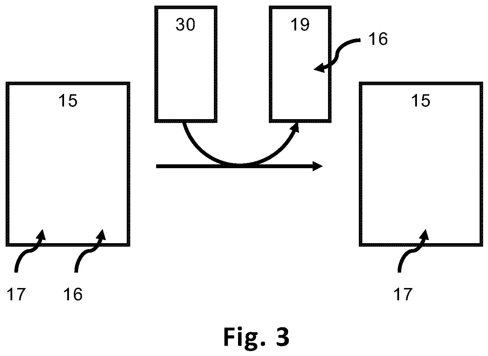

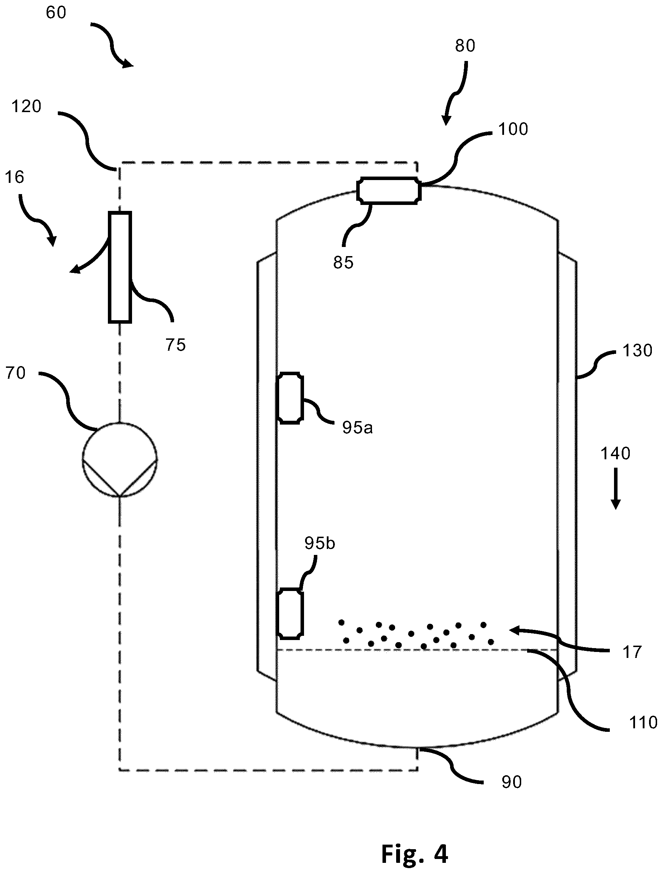

In Fig. 3 a schematic process for classification of a lithium sorbent material 15 is shown. The process illustrated in Fig. 3 is carried out in the reactor 60 with an inlet opening 90 and an outlet opening 100 as shown in Fig. 4. The lithium sorbent material 15 is in particular a lithium aluminate intercalate, which may be synthesized according to the process outlined in Fig. 1 and Fig. 2. The lithium sorbent material 15 comprises small particles 16 with a preferred mean size lower than 500 µm and large particles 17 with a preferred mean size higher than or equal to 500 µm. Firstly, the lithium sorbent material 15 is suspended in a fluid 30 for obtaining a suspension 19. Afterwards, the fluid 30 is streamed through the inlet opening 90 of the container 80, such that the suspension 19 is overflowing through the outlet opening 100. Thereby the small particles 16 are fluidized and at least partly separated from the large particles 17. Alternatively, or additionally, the suspension 19 is at least partly removed from the container 80 through the outlet opening 100, in particular by pumping it out. Thereby the small particles 16 are fluidized and at least partly separated from the large particles 17.

While streaming the fluid 30 through the inlet opening 90; and/or removing the suspension 19 at least partly from the container 80 through the outlet opening 100, the flow rate is higher than the fluidization velocity of the small particles 16. Preferably the flow rate is higher than 1.0 m/h, more preferably higher than 4.0 m/h. Moreover, the flow rate is lower than the fluidization velocity of the large particles 17, preferably lower than 20.0 m/h, more preferably lower than 18.0 m/h. For example, the flow rate is from 2.0 m/h to 20.0 m/h, preferably from 2.0 m/h to 18.0 m/h, more preferably from 2.0 m/h to 14.0 m/h, most preferably from 4.0 m/h to 8.0 m/h. The fluid 30 is streamed through the inlet opening 90; and/or the suspension 19 is removed from the container 80 through the outlet opening 100 in an amount of at least 1.5 BV, preferably at least 3 BV, more preferably from 6 BV to 36 BV, most preferably from 12 BV to 30 BV.

Fig. 4 shows the reactor 60 for classification of a lithium sorbent material 15 according to the process described in Fig. 3. Most components and features of the reactor 60 of Fig. 4 are identical to those of the reactor for synthesizing the lithium sorbent material 15 as shown in Fig. 2. The reactor for classification of a lithium sorbent material 15 according to Fig. 4 comprises the container 80 with the inlet opening 90 and the outlet opening 100 and a fluid mover unit, which is preferably a fluid circulation unit 70 and more preferably a pump. The fluid circulation unit 70 streams the fluid 30 through the inlet opening 90. Additionally or alternatively, the fluid circulation unit 70 removes the suspension 19 through the outlet opening 100. In the illustrated example, the fluid 30 streams through the reactor from bottom to top in a direction opposite to the direction of gravitation 140. The opposite direction is also possible. The reactor 60 also comprises a solid-liquid separation unit 75, in particular a filter, for separating the small particles 16 from the suspension 19, in particular after passing through the outlet opening 100, for yielding the small particles 16 and the fluid 30, which is preferably recycled and again streamed into the container 80 through the inlet opening 90.

The reactor 60 is further comprising a turbidity monitoring unit 85, for monitoring a turbidity of the suspension 19. The turbidity monitoring unit 85 is preferably arranged at the outlet opening 100. Optionally, a second turbidity monitoring unit is arranged inside the container 80. During the process for classification the turbidity of the suspension 19 is monitored, preferably while streaming the fluid 30 through the inlet opening 90 and/or while removing the suspension 19 through the outlet opening 100. The streaming of the fluid 30 through the inlet opening 90 and/or the removing of the suspension 19 through the outlet opening 100 is stopped, if a turbidity of the suspension 19 is below 300 NTU, more preferably below 200 NTU, most preferably below or equal to 150 NTU.

The reactor also comprises an optional first particle size monitoring unit 95a arranged in a top portion of the container 80 and a second particle size monitoring unit 95b arranged in a bottom portion of the container 80, both for monitoring a particle size distribution of the lithium sorbent material 15. The filter unit 110 is preferably in the bottom portion of the container 80 and arranged nearby the second particle size monitoring unit 95b. The large particles 17 are retained by the filter unit 110, while the small particles 16 are fluidized and at least partly separated from the large particles 17. Optionally, a third particle size monitoring unit is arranged at the outlet opening 100 of the container 80. During the process for classification the particle size distribution of the lithium sorbent material is monitored, preferably while streaming the fluid 30 through the inlet opening 90 and/or while removing the suspension 19 at least partly from the container 80 through the outlet opening 100. The streaming of the fluid 30 through the inlet opening 90 and/or the removing of the suspension 19 through the outlet opening 100 is stopped, if the particle size distribution of the lithium sorbent material 15, in particular measured in the bottom portion of the container 80 by the second particle size monitoring unit 95b, has a mean particle size of more than 500 µm, preferably more than 800 µm, more preferably from 800 µm to 900 µm, most preferably 850 µm. The streaming of the fluid 30 through the inlet opening 90 and/or the removing of the suspension 19 through the outlet opening 100 may also be stopped, if a particle size distribution of the lithium sorbent material 15 has a D10 value of more than 200 µm, preferably from 300 µm to 550 µm, more preferably from 450 µm to 500 µm, preferably measured by the second particle size monitoring unit 95b.

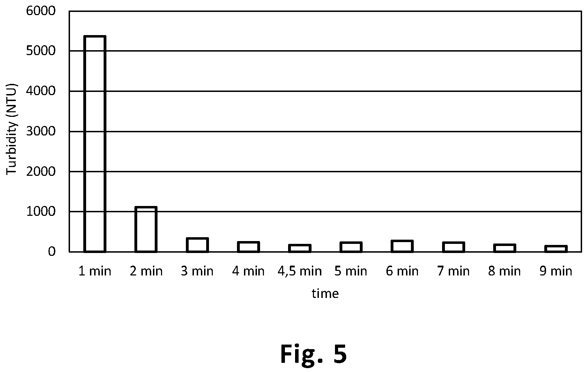

Fig. 5 shows a diagram of an exemplary turbidity measurement, for example recorded by the turbidity monitoring unit 85 shown in Fig. 4. The ordinate represents the turbidity measured in NTU. The abscissa represents the time during which the fluid 30 is streamed through the inlet opening 90 and/or the suspension 19 is removed through the outlet opening 100. After 1 minute the turbidity is above 5000 NTU. After 2 minutes the turbidity is already drastically decreased to approximately 1100 NTU. After 3 minutes the turbidity is below 650 NTU and after 4 minutes below 500 NTU. After 9 minutes the turbidity is below 300 NTU and the process for classification is stopped after 10 minutes.

The resulting lithium sorbent material 15 obtained after classification according to the process for classification comprises a lithium content higher than 2.3 wt.-%, preferably higher than 2.8 wt.-%, more preferably 3.5 wt.-% and a particle size distribution with a D10 value from 350 µm to 550 µm, preferably from 450 µm to 500 µm, preferably a D50 value from 650 µm to 1100 µm, preferably from 750 µm to 850 µm, and preferably a small particle 16 content, with a preferred mean size lower than 200 µm, lower than 10.0 wt.-%, more preferably lower than 6.0 wt.-%, most preferably 5.4 wt.-%. The lithium sorbent material 15 comprises a small particle 16 content lower than 10.0 wt.-%, preferably lower than 6.0 wt.-%, more preferably lower than 5.4 wt.-%. The lithium sorbent material 15 is used in a direct lithium extraction process and has a pressure drop measured at a flow rate of 14 m/h, which pressure drop is lower than 600 mbar, preferably lower than 300 mbar, more preferably lower than 250 mbar, most preferably about 200 mbar. A pressure drop in the aforementioned ranges is particularly advantageous for enhancing efficiency in the direct lithium extraction process. The advantageous effects of the process for classification are comprised in the table below.

| | | Turbidity [NTU] | D10 [µm] | Pressure drop at 14 m/h flow rate [mbar] |
|---|---|---|---|---|
| Comparative example 1 | Before classification | 5370 | 300 | >600 |
| Example 2 | After classification for 10 min | 150 | 485 | 200 |

As can be retrieved from the table above, before classification, the suspension 19 containing the lithium sorbent material 15 had a turbidity of 5370 NTU, a D10 value of 300 µm and the resulting lithium sorbent material 15 had a pressure drop of above 600 mbar. Favorably, after the process for classification, the suspension 19 containing the lithium sorbent material 15 has a turbidity of 150 NTU, a D10 value of 485 µm and the resulting lithium sorbent material 15 has a pressure drop of 200 mbar. Alternatively, by finetuning the process for synthesizing, a lithium sorbent material 15 with the same properties can be obtained.

It is to be understood that the illustrations represent only an example. The skilled person can implement the different illustrated features and/or steps in corresponding reactor, processes, steps, units or devices for carrying out or realizing the invention. The skilled person may thereby also choose different arrangements or subset of the illustrated steps and/or features.

The foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject-matter is dedicated to the public.

In the claims and the description, the word "comprising" does not exclude other elements or steps, and the indefinite article "a" or "an" does not exclude a plurality. A single step, element or unit may fulfil the functions of several items or steps recited in the claims and/or the description. The mere fact that certain measures are recited in mutually different dependent claims and/or different preferred embodiments of the description does not indicate that a combination of these measures cannot be used to advantage.

## Claims

1. Process for synthesizing a lithium sorbent material, in particular a lithium aluminate intercalate, comprising steps of:
providing an alumina precursor (10), in particular a three-dimensionally structured porous activated alumina, a lithium precursor (20), in particular lithium hydroxide and/or lithium chloride and a fluid (30), preferably water;
dissolving or suspending the alumina precursor (10) and the lithium precursor (20) in the fluid (30) for obtaining a reaction mixture (40); and
circulating the reaction mixture (40), or at least a liquid portion of the reaction mixture (40), in a loop (50) for mixing the reaction mixture (40).

2. The process according to any previous claim, comprising steps of:
circulating the reaction mixture (40) in a loop (50) with a flow rate, which is smaller than the fluidization velocity of particles in the reaction mixture (40), in particular smaller than the fluidization velocity of suspended alumina precursor (10) particles.

3. The process according to any previous claim, comprising steps of:
circulating the reaction mixture (40) in a loop (50) with a flow rate from 1 BV/h to 5 BV/h, preferably from 2 BV/h to 4 BV/h.

4. The process according to any previous claim, comprising steps of:
providing a reactor (60) comprising a container (80) with a filter unit (110) for retaining solid particles; and
circulating the reaction mixture (40), or at least the liquid portion of the reaction mixture (40), in a loop (50) such that the reaction mixture (40) passes through the filter unit (110).

5. The process according to any previous claim, comprising steps of:
providing a reactor (60) comprising an inlet opening (90), and
wherein during circulating in a loop (50), the reaction mixture (40), or at least the liquid portion of the reaction mixture (40), enters the container (80) through the inlet opening (90) in a direction opposite to the direction of gravitation (140).

6. The process according to any previous claim, comprising steps of:
providing a reactor (60) comprising a fluid circulation unit (70), preferably a pump; and
circulating the reaction mixture (40), or at least the liquid portion of the reaction mixture (40), in a loop (50) with the fluid circulation unit (70).

7. The process according to any previous claim, comprising steps of:
constantly circulating the reaction mixture (40) in a loop (50), preferably while maintaining the pressure in the reactor (60) with a deviation of less than 20%, in particular until the synthesis is completed.

8. The process according to any previous claim, comprising steps of:
heating the reaction mixture (40), preferably outside of the container (80).

9. Reactor (60) for synthesizing a lithium sorbent material according to the process of any previous claim, in particular a reactor (60), comprising:
a fluid circulation unit (70), preferably a pump, for circulating the reaction mixture (40), or at least a liquid portion of the reaction mixture (40), in a loop (50) through the reactor (60); and
a container (80) with an inlet opening (90) and an outlet opening (100), which are connected to the fluid circulation unit (70), wherein
the container (80) comprises a filter unit (110) for retaining solid particles, which is arranged between the inlet opening (90) and the outlet opening (100).

10. The reactor (60) according to the previous claim,
wherein the filter unit (110) is configured as a filter mesh or a filter plate, and
wherein the filter unit (110) comprises a plurality of pores and/or slits, with a pore size or a slit size from 350 µm to 500 µm, preferably between 400 µm to 450 µm.

11. The reactor (60) according to any previous claim directed thereto, comprising:
a heat exchanger for heating the reaction mixture (40), wherein the heat exchanger is preferably arranged outside of the container (80).

12. The reactor (60) according to any previous claim directed thereto, comprising:
a housing (130), accommodating the reactor (60) or at least a portion of the container (80), for controlling a temperature of the reaction mixture (40).

13. Lithium sorbent material, in particular a lithium aluminate intercalate, preferably synthesized according to the process of any previous claim directed thereto, comprising:
a lithium content higher than 2.3 wt.-%, preferably higher than 2.8 wt.-%, more preferably 3.5 wt.-%;
a particle size distribution with
a D10 value from 350 µm to 550 µm, preferably from 450 µm to 500 µm, and preferably a D50 value from 650 µm to 1100 µm, more preferably from 750 µm to 850 µm.

14. The lithium sorbent material according to the previous claim, comprising:
a fine sorbent particle content lower than 10.0 wt.-%, preferably lower than 6.0 wt.-%, more preferably lower than 5.4 wt.-%.

15. Use of a lithium sorbent material according to any previous claim directed thereto in a direct lithium extraction process.
